# FASCICULE DE BREVET EUROPEEN

(11) **EP 4 247 647 B1**
(45) Date de publication et mention de la délivrance du brevet: **26.02.2025**
(21) Numéro de dépôt: 21798739.5
(22) Date de dépôt: 29.09.2021
(51) Int. Cl.: B60B 7/04, B60B 7/06, B60B 7/08, B60B 7/00

(54) **ENJOLIVEUR POUR UNE ROUE EN TÔLE, ROUE EN TÔLE COMPORTANT UN TEL ENJOLIVEUR ET VÉHICULE COMPORTANT UNE TELLE ROUE**
RADKAPPE FÜR METALLRAD, METALLRAD MIT EINER DERARTIGEN RADKAPPE UND RZEUG MIT EINEM DERARTIGEN RAD
WHEEL COVER FOR METAL WHEEL, WHEEL HAVING SAID WHEEL CAP AND VEHICLE WIHT SAID WHEEL

(30) Priorité: 19.11.2020 FR 2011865
(43) Date de publication de la demande: 27.09.2023
(73) Titulaire: Stellantis Auto SAS, 78300 Poissy (FR)
(72) Inventeur: PALPACUER, Eric, 75013 PARIS (FR); DELATTRE, Nicolas, 80290 NAMPS MAISNIL (FR); NUBOER, Robert, 91190 ST AUBIN (FR); PILLE, Maxime, 92350 LE PLESSIS ROBINSON (FR)
(74) Mandataire: BCIP
(86) Numéro de dépôt international: PCT/FR2021/051678
(87) Numéro de publication internationale: WO 2022/106763

(56) Documents cités:
- WO-A1-2017/048764
- FR-A1- 3 043 946
- FR-A1- 3 093 673

## Description

La présente invention revendique la priorité de la demande française N° 2011865 déposée le 19.11.2020.

La présente invention concerne un ensemble composé par un enjoliveur pour une roue en tôle et une roue en tôle comportant un tel enjoliveur. Selon un deuxième aspecte, l'invention concerne un véhicule comportant une telle roue en tôle équipé d'un tel enjoliveur.

La présente invention concerne plus particulièrement un tel enjoliveur pour une roue en tôle du type comportant une jante qui comporte en son centre un voile, le voile comportant une série d'ouvertures en bordure de la jante, ledit enjoliveur étant positionné au niveau d'une desdites ouvertures et comportant une première partie de maintien qui est adaptée pour prendre appui contre un bord de ladite ouverture.

Le document FR-A1-3093673 divulgue un tel enjoliveur pour une roue en tôle du type comportant une jante qui comporte en son centre un voile, le voile comportant une série d'ouvertures en bordure de la jante où des enjoliveurs sont positionnés au niveau d'une partie des ouvertures, les enjoliveurs comportant une première partie de maintien qui est adaptée pour prendre appui contre un bord de l'ouverture correspondante.

Un tel enjoliveur du fait de son unique maintien le long du bord de l'ouverture de la jante en tôle peut être mal positionné ou tourner sur lui-même lors du roulage du véhicule et poser un problème de vibrations et d'esthétique à la roue.

Le dispositif selon l'invention permet de remédier à cet inconvénient.

Il comporte en effet, selon l'invention, un enjoliveur pour une roue en tôle du type comportant une jante comportant en son centre un voile, ledit voile comportant une série d'ouvertures en bordure de la jante, ledit enjoliveur étant positionné au niveau d'une desdites ouvertures et comportant une première partie de maintien qui est adaptée pour prendre appui contre un bord de ladite ouverture, ledit enjoliveur comportant au moins une deuxième partie de maintien qui est adaptée pour prend appui contre la jante.

Selon l'invention, la jante de la roue en tôle comporte un bord libre recourbé formant une gorge, la seconde partie de maintien de l'enjoliveur présentant une forme complémentaire à ladite gorge pour prendre appui dans ladite gorge.

Selon une caractéristique additionnelle de l'invention, la jante présente en bordure du voile une seconde gorge, la gorge formée par ledit bord libre formant une première gorge, la seconde partie de maintien de l'enjoliveur présentant une forme complémentaire à la première gorge et à la seconde gorge, permettant à la seconde partie de maintien de l'enjoliveur de prendre appui dans chacune des deux gorges.

Selon une caractéristique additionelle de l'invention, la première partie de maintien est adaptée pour se déformer élastiquement lors du montage de l'enjoliveur sur la roue.

Selon une caractéristique additionelle de l'invention, la première partie de maintien comporte une partie courbée qui présente un profil en U, ledit profil en U étant adapté pour enserrer le bord de l'ouverture.

Selon une caractéristique additionelle de l'invention, les extrémités libres de la partie courbée comportent des moyens de préhension facilitant la déformation élastique de ladite première partie de l'enjoliveur.

Selon une caractéristique additionelle de l'invention, une partie intermédiaire relie la première partie de maintien à la seconde partie de maintien, ladite partie intermédiaire présentant une forme adaptée pour pouvoir se déformer élastiquement suivant une direction privilégier, permettant de rapprocher la première partie de maintien de la seconde partie de maintien.

Selon une caractéristique additionelle de l'invention, l'enjoliveur comporte une partie technique et une partie d'habillage, la partie d'habillage étant clippée sur la partie technique et la partie technique comportant la première partie de maintien et la seconde partie de maintien.

Les dessins annexés illustrent l'invention :
[Fig. 1] représente une roue en tôle qui comporte une jante avec en son centre un voile et au moins un enjoliveur selon l'invention qui recouvre au moins partiellement une ouverture formée dans le voile.
[Fig. 2] représente une vue partielle en coupe de la roue au niveau d'un des enjoliveurs selon l'invention.
[Fig. 3] représente l'enjoliveur selon l'invention qui comporte une partie technique et une partie d'habillage.
[Fig. 4] représente un enjoliveur selon un second mode de réalisation de l'invention.

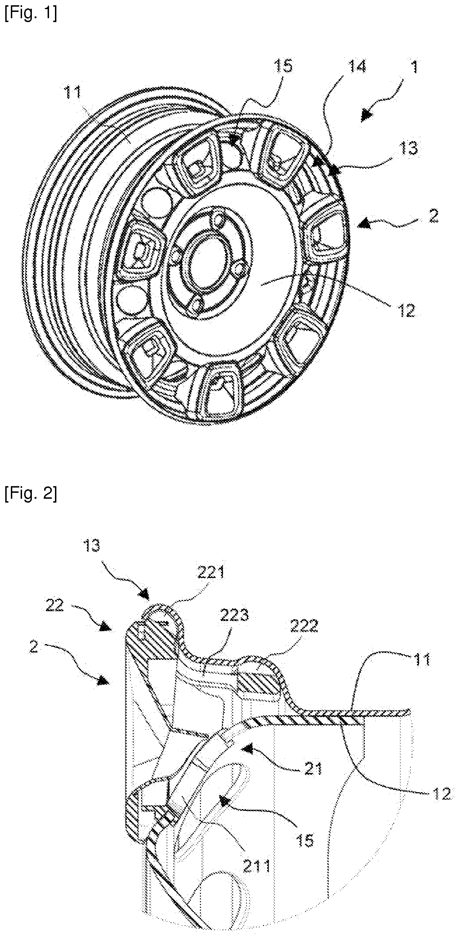

La figure 1 représente une roue en tôle 1 qui comporte une jante 11 avec en son centre un voile 12.

La jante 11 comporte une première gorge 13 qui est formée par un bord libre extérieur recourbé et une seconde gorge 14 qui est positionnée à la bordure de la jante 11 avec le voile 12.

Le voile 12 comporte une série d'ouvertures 15 qui sont formés en bordure du voile 12 et de la jante 11, des enjoliveurs 2 sont positionnés au niveau d'une partie de ces ouvertures 15, les masquant en partie.

Sur l'exemple tel que représenté, seule une ouverture 15 sur deux est masquée par un enjoliveur 2, mais en fonction du rapprochement des ouvertures 15 et de la taille des enjoliveurs 2 ont peut avoir plus ou moins d'enjoliveurs 2.

La figure 2 représente une vue partielle, en coupe, de la roue 1 au niveau d'un des enjoliveurs 2.

Sur cette figure 2 est plus particulièrement visible la forme de la première gorge 13 et de la seconde gorge 14 formées le long de la jante 11.

L'enjoliveur 2 comporte au moins deux parties de maintien, une première partie de maintien 21 qui est adaptée pour prendre appui contre un bord de l'ouverture 15 et une deuxième partie de maintien 22 qui est adaptée pour prendre appui contre la jante 11.

La seconde partie de maintien 22 de l'enjoliveur 2 présente une forme complémentaire à la première gorge 13 et à la seconde gorge 14, lui permettant de prendre appui dans chacune des deux gorges.

La seconde partie de maintien 22 comporte une première partie 221 qui reprend la courbure de la jante 11 pour bien se stabiliser dans la première gorge 13 et qui présente un profil en arc de cercle pour bien épouser le profil en arc de cercle de la première gorge 13.

La seconde partie de maintien 22 comporte une seconde partie 222 qui reprend, comme la première partie 221, la courbure de la jante 11 pour bien se stabiliser dans la seconde gorge 14 et qui présente un profil en arc de cercle pour bien épouser le profil en arc de cercle de la seconde gorge 14.

La seconde partie de maintien 22 comporte une partie de liaison 223 qui relie de façon rigide la première partie 221 et la seconde partie 222.

La première partie de maintien 21 est adaptée pour se déformer élastiquement lors du montage de l'enjoliveur 2 sur la roue 1.

La première partie de maintien 21 comporte une partie linéaire 211 qui forme un rail double courbé à section en U, adaptée pour enserrer le bord de l'ouverture 15.

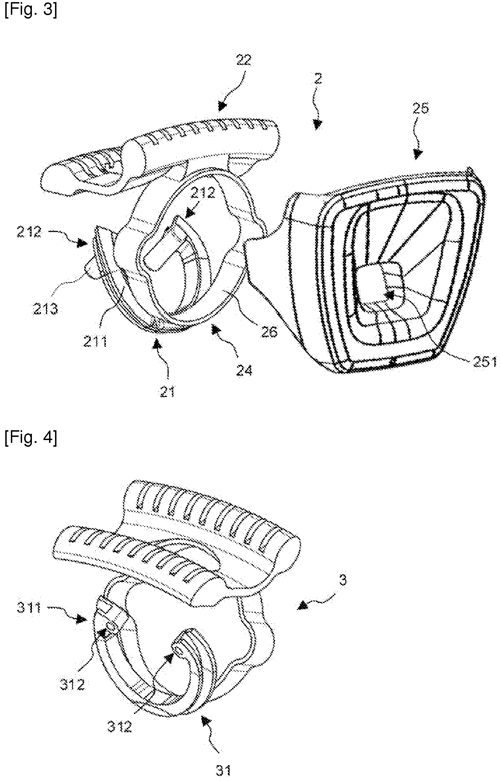

La figure 3 représente un enjoliveur 2 avec une partie technique 24 et une partie d'habillage 25 qui sont représentées avant de les assembler.

La partie technique 24 se compose de la première partie de maintien 21, de la seconde partie de maintien 22 et d'une partie intermédiaire 26.

La partie intermédiaire 26 présente une forme adaptée pour pouvoir se déformer élastiquement suivant une direction privilégier, permettant de rapprocher la première partie de maintien 21 de la seconde partie de maintien 22 lors du positionnement de l'enjoliveur 2 dans l'ouverture 15 correspondante.

La partie d'habillage 25 est clippée sur la partie technique 24, masquant les différentes parties de maintien, tout en conservant une ouverture centrale 251 qui permet de maintenir un flux de circulation d'air pour le refroidissement du dispositif de freinage.

La première partie de maintien 21 comporte aux extrémités libres 212 du rail double courbé 211 des moyens de préhension 213 qui facilitent la déformation élastique du rail double courbé 211.

Les moyens de préhension 213 de la première partie de maintien 21 sont formés par deux doigts qui peuvent être facilement enserrées par la main d'un opérateur lors du montage de l'enjoliveur 2 sur la roue 1 et cela sans outils particuliers.

Sur la figure 4 est représenté un second mode de réalisation de moyens de préhension 311 d'une première partie de maintien 31 d'un enjoliveur 3.

Sur ce second mode de réalisation, la première partie de maintien 31 nécessitent l'utilisation d'une pince afin de prendre appui dans des ouvertures 312 formées dans chacun des deux moyens de préhension 311 pour pouvoir déformer élastiquement la première partie de maintien 31 et l'insérer dans une des ouvertures du voile de la roue en tôle.

## Revendications

1. Ensemble comportant un enjoliveur (2, 3) et une roue en tôle (1), ladite roue en tôle (1) comportant une jante (11) qui comporte en son centre un voile (12), ledit voile (12) comportant une série d'ouvertures (15) en bordure de la jante (11), ledit enjoliveur (2, 3) étant positionné au niveau d'une desdites ouvertures (15) et comportant une première partie de maintien (21, 31) qui est adaptée pour prendre appui contre un bord de ladite ouverture (15), ledit enjoliveur (2, 3) comportant au moins une deuxième partie de maintien (22) qui est adaptée pour prendre appui contre la jante (11), **caractérisé en ce que** la jante (11) de la roue en tôle (1) comporte un bord libre recourbé formant une gorge (13), la seconde partie de maintien (22) de l'enjoliveur (2, 3) présentant une forme complémentaire à ladite gorge (13) pour prendre appui dans ladite gorge (13).

2. Ensemble selon la revendication 1, **caractérisé en ce que** la jante (11) présente en bordure du voile (12) une seconde gorge (14), la gorge (13) formée par ledit bord libre formant une première gorge, la seconde partie de maintien (22) de l'enjoliveur (2, 3) présentant une forme complémentaire à la première gorge (13) et à la seconde gorge (14), permettant à la seconde partie de maintien (22) de l'enjoliveur (2, 3) de prendre appui dans chacune des deux gorges (13, 14).

3. Ensemble selon la revendication 2, **caractérisé en ce que** la première partie de maintien (21, 31) est adaptée pour se déformer élastiquement lors du montage de l'enjoliveur (2, 3) sur la roue (1).

4. Ensemble selon la revendication 3, **caractérisé en ce que** la première partie de maintien (21, 31) comporte une partie courbée (211) qui présente un profil en U, ledit profil en U étant adapté pour enserrer le bord de l'ouverture (15).

5. Ensemble selon la revendication 4, **caractérisé en ce que** les extrémités libres (212) de la partie courbée (211) comportent des moyens de préhension (213, 311) facilitant la déformation élastique de ladite première partie de l'enjoliveur.

6. Ensemble selon l'une quelconque des revendications précédentes, **caractérisé en ce qu'**une partie intermédiaire (26) relie la première partie de maintien (21, 31) à la seconde partie de maintien (22), ladite partie intermédiaire (26) présentant une forme adaptée pour pouvoir se déformer élastiquement suivant une direction privilégier, permettant de rapprocher la première partie de maintien (21, 31) de la seconde partie de maintien (22).

7. Ensemble selon l'une quelconque des revendications précédentes, **caractérisé en ce que** ledit enjoliveur (2, 3) comporte une partie technique (24) et une partie d'habillage (25), la partie d'habillage (25) étant clippée sur la partie technique (24) et la partie technique (24) comportant la première partie de maintien (21, 31) et la seconde partie de maintien (22).

8. Véhicule comportant ensemble comportant un enjoliveur (2, 3) et une roue en tôle (1) selon l'une quelconque des revendications précédentes.

## Patentansprüche

1. Anordnung mit einer Zierkappe (2, 3) und einem Blechrad (1), wobei das Blechrad (1) eine Felge (11) aufweist, die in ihrer Mitte einen Steg (12) aufweist, wobei der Steg (12) eine Reihe von Öffnungen (15) am Rand des Stegs (11) aufweist, wobei die Zierkappe (2, 3) an einer der Öffnungen (15) angeordnet ist und einen ersten Halteabschnitt (21, 31) aufweist, der geeignet ist, sich gegen einen Rand der Öffnung (15), der Zierkappe (2, abzustützen, 3) mit mindestens einem zweiten Halteteil (22), das geeignet ist, sich an der Felge (11) abzustützen, **dadurch gekennzeichnet, dass** die Felge (11) des Blechrads (1) einen gebogenen freien Rand aufweist, der eine Nut (13) bildet, wobei der zweite Halteteil (22) der Zierkappe (2, 3) eine zu der Nut (13) komplementäre Form aufweist, um sich in der Nut (13) abzustützen.

2. Anordnung nach Anspruch 1, **dadurch gekennzeichnet, dass** die Felge (11) am Rand des Vlieses (12) eine zweite Nut (14) aufweist, wobei die von dem freien Rand gebildete Nut (13) eine erste Nut bildet, wobei der zweite Halteabschnitt (22) der Zierkappe (2, 3) eine Form aufweist, die komplementär zu der ersten Nut (13) und der zweiten Nut (14) ist, wodurch der zweite Halteabschnitt (22) der Zierkappe (2, 3) in jeder der beiden Nuten (13, 14) zur Anlage kommen kann.

3. Anordnung nach Anspruch 2, **dadurch gekennzeichnet, dass** das erste Halteteil (21, 31) angepasst ist, um sich beim Anbringen der Zierkappe (2, 3) an dem Rad (1) elastisch zu verformen.

4. Anordnung nach Anspruch 3, **dadurch gekennzeichnet, dass** der erste Halteabschnitt (21, 31) einen gekrümmten Abschnitt (211) aufweist, der ein U-Profil aufweist, wobei das U-Profil angepasst ist, um den Rand der Öffnung (15) einzuklemmen.

5. Anordnung nach Anspruch 4, **dadurch gekennzeichnet, dass** die freien Enden (212) des gekrümmten Abschnitts (211) Greifmittel (213, 311) aufweisen, die die elastische Verformung des ersten Abschnitts der Zierkappe erleichtern.

6. Anordnung nach einem der vorhergehenden Ansprüche, **dadurch gekennzeichnet, dass** ein Zwischenabschnitt (26) den ersten Halteabschnitt (21, 31) mit dem zweiten Halteabschnitt (22) verbindet, wobei der Zwischenabschnitt (26) eine Form aufweist, die geeignet ist, sich elastisch in einer bevorzugten Richtung verformen zu können, die es ermöglicht, den ersten Halteabschnitt (21, 31) näher an den zweiten Halteabschnitt (22) heranzuführen.

7. Anordnung nach einem der vorhergehenden Ansprüche, **dadurch gekennzeichnet, dass** die Zierkappe (2, 3) einen technischen Teil (24) und einen Verkleidungsteil (25) aufweist, wobei der Verkleidungsteil (25) an den technischen Teil (24) angeklipst ist und der technische Teil (24) den ersten Halteteil (21, 31) und den zweiten Halteteil (22) aufweist.

8. Fahrzeug, das zusammen eine Zierkappe (2, 3) und ein Blechrad (1) nach einem der vorhergehenden Ansprüche aufweist.

## Claims

1. Assembly comprising a trim (2, 3) and a sheet metal wheel (1), said sheet metal wheel (1) comprising a rim (11) which comprises at its center a web (12), said web (12) comprising a series of openings (15) at the edge of the rim (11), said trim (2, 3) being positioned at one of said openings (15) and comprising a first holding part (21, 31) which is adapted to bear against an edge of said opening (15), said trim (2, 3) comprising at least one second holding part (22) which is adapted to bear against the rim (11), **characterized in that** the rim (11) of the sheet metal wheel (1) comprises a curved free edge forming a groove (13), the second holding part (22) of the trim (2, 3) having a shape complementary to said groove (13) to bear in said groove (13).

2. Assembly according to claim 1, **characterized in that** the rim (11) has, at the edge of the web (12), a second groove (14), the groove (13) formed by the said free edge forming a first groove, the second holding part (22) of the trim (2, 3) having a shape complementary to the first groove (13) and to the second groove (14), allowing the second holding part (22) of the trim (2, 3) to bear in each of the two grooves (13, 14).

3. Assembly according to claim 2, **characterized in that** the first holding part (21, 31) is adapted to deform elastically when the trim (2, 3) is mounted on the wheel (1).

4. Assembly according to claim 3, **characterized in that** the first holding part (21, 31) comprises a curved part (211) which has a U-shaped profile, the said U-shaped profile being adapted to grip the edge of the opening (15).

5. Assembly according to claim 4, **characterized in that** the free ends (212) of the curved part (211) comprise gripping means (213, 311) facilitating the elastic deformation of the said first part of the trim.

6. Assembly according to any one of the preceding claims, **characterized in that** an intermediate part (26) connects the first holding part (21, 31) to the second holding part (22), the said intermediate part (26) having a shape adapted to be able to deform elastically in a favored direction, making it possible to bring the first holding part (21, 31) closer to the second holding part (22).

7. Assembly according to any one of the preceding claims, **characterized in that** the said trim (2, 3) comprises a technical part (24) and a trim part (25), the trim part (25) being clipped onto the technical part (24) and the technical part (24) comprising the first holding part (21, 31) and the second holding part (22).

8. A vehicle comprising an assembly comprising a trim (2, 3) and a sheet metal wheel (1) according to any one of the preceding claims.
